# EUROPEAN PATENT APPLICATION

(11) **EP 4 491 961 A1**
(43) Date of publication of application: **15.01.2025**
(21) Application number: 23766113.7
(22) Date of filing: 09.03.2023
(51) Int. Cl.: F24F 11/47, F24F 11/64, F24F 11/61, F24F 11/89, F24F 110/10, F24F 140/00, F24F 140/60

(54) **AIR CONDITIONER AND POWER QUANTITY CONTROL METHOD THEREFOR**

(30) Priority: 09.03.2022 CN 202210231789
(71) Applicant: Hisense Air Conditioning Co., Ltd., Qingdao, Shandong 266736 (CN)
(72) Inventor: LIU, Teng, Qingdao, Shandong 266736 (CN); ZHANG, Shaoliang, Qingdao, Shandong 266736 (CN); ZHANG, Ran, Qingdao, Shandong 266736 (CN)
(74) Representative: Petraz, Gilberto Luigi
(86) International application number: PCT/CN2023/080627
(87) International publication number: WO 2023/169536

(57) **Abstract**

An air conditioner and a power quantity control method therefor are provided. The air conditioner includes an indoor unit, an outdoor unit, a receiver, and a controller. The compressor is configured to compress refrigerant. The receiver is configured to receive a preset power quantity input by a user. The controller is connected to the receiver and the compressor. The controller is configured to obtain the preset power quantity, determine a first power quantity and a second power quantity based on the preset power quantity, supply power to the air conditioner according to the first power quantity and control the compressor to operate in a preset mode until the first power quantity is used up, determine a first operating frequency of the compressor when the first power quantity is used up, supply power to the air conditioner according to the second power quantity and determine a target operating frequency of the compressor based on the first operating frequency to control the power consumption of the air conditioner, and control the compressor to operate at the target operating frequency until the second power quantity is used up.

## Description

This application claims the priority of Chinese Patent Application No. 202210231789.6 filed on March 9, 2022, which is incorporated by reference herein in its entirety.

### TECHNICAL FIELD

The present disclosure relates to the field of air conditioning technology, particularly to an air conditioner and a power quantity control method therefor.

### BACKGROUND

Currently, although operation modes of air conditioners vary, their overall control strategies are basically the same, involving establishing control logic between temperature zones and operating frequencies, as well as establishing a relationship between set temperatures and operating frequencies. This control strategy of the air conditioner determines that the power consumption is random and uncontrollable.

### SUMMARY

Some embodiments of the present disclosure provide an air conditioner. The air conditioner includes an indoor unit, an outdoor unit, a receiver, and a controller. The indoor unit includes an indoor heat exchanger. The outdoor unit includes an outdoor heat exchanger and a compressor. The outdoor heat exchanger is connected to the indoor heat exchanger. The compressor is configured to compress refrigerant so that the compressed refrigerant enters the outdoor heat exchanger or the indoor heat exchanger. The receiver is configured to receive a preset power quantity input by the user. The controller is connected to the receiver and the compressor. The controller is configured to:
obtain the preset power quantity;
determine a first power quantity and a second power quantity based on the preset power quantity, wherein the sum of the first power quantity and the second power quantity is less than or equal to the preset power quantity;
supply power to the air conditioner according to the first power quantity, control the compressor to operate in a preset mode until the first power quantity is used up, and determine a first operating frequency of the compressor when the first power quantity is used up;
supply power to the air conditioner according to the second power quantity, and determine a target operating frequency of the compressor based on the first operating frequency; and
control the compressor to operate at the target operating frequency until the second power quantity is used up.

When supplying power to the air conditioner according to the second power quantity and determining the target operating frequency of the compressor based on the first operating frequency, the controller is configured to:
determine a first current value corresponding to the first operating frequency, determine an average current value for supplying power to the air conditioner according to the second power quantity, and compare the first current value with the average current value; and
determine the target operating frequency of the compressor based on the comparison result and control the compressor to operate at the target operating frequency.

Some embodiments of the present disclosure provide a power quantity control method for an air conditioner. The method is applied to the air conditioner and includes:
obtaining a preset power quantity;
determine a first power quantity and a second power quantity based on the preset power quantity, wherein the sum of the first power quantity and the second power quantity is less than or equal to the preset power quantity;
supplying power to the air conditioner according to the first power quantity, controlling the compressor to operate in a preset mode until the first power quantity is used up, and determining a first operating frequency of the compressor when the first power quantity is used up;
supplying power to the air conditioner according to the second power quantity, and determining a target operating frequency of the compressor based on the first operating frequency; and
controlling the compressor to operate at the target operating frequency until the second power quantity is used up.

The determining the target operating frequency of the compressor based on the first operating frequency includes:
determining a first current value corresponding to the first operating frequency, determining an average current value for supplying power to the air conditioner according to the second power quantity, and comparing the first current value with the average current value; and
determining the target operating frequency of the compressor based on the comparison result and controlling the compressor to operate at the target operating frequency.

### BRIEF DESCRIPTION OF DRAWINGS

In order to provide a clearer explanation of the technical solutions in the present disclosure, a brief introduction to the drawings required in some embodiments of the present disclosure will be provided below. It is obvious that the drawings described below are only some of the drawings in some embodiments of the present disclosure. Those skilled in the art can obtain other drawings based on these drawings. In addition, the drawings in the following description can be regarded as schematic diagrams, not limiting the actual dimensions of the products, the actual process of the methods, the actual timing of signals, etc., involved in the embodiments of the present disclosure.
FIG. 1 is a block diagram of a structure of an air conditioner according to some embodiments.
FIG. 2 is a flowchart of a power quantity control method for an air conditioner according to some embodiments.
FIG. 3 shows a relationship between an operating frequency and an operating time of a compressor according to some embodiments.
FIG. 4 is a flowchart of another power quantity control method for an air conditioner according to some embodiments.
FIG. 5 is a flowchart of yet another power quantity control method for an air conditioner according to some embodiments.
FIG. 6 is a flowchart of yet another power quantity control method for an air conditioner according to some embodiments.
FIG. 7 is a flowchart of yet another power quantity control method for an air conditioner according to some embodiments.

**In the figures:**
1-Air conditioner;
101-Indoor unit; 102-Outdoor unit;
10-Refrigerant circulation loop; 11-Compressor; 12-Receiver; 13-Controller; 14-Four-way valve; 15-Indoor heat exchanger; 16-Expansion valve; 17-Outdoor heat exchanger;
PQ-Preset power quantity; Q 1-First power quantity; Q2-Second power quantity;
TOF-Target operating frequency; OF1-First operating frequency; OF2-Second operating frequency; OF3-Third operating frequency;
As-Average current value; A1-First current value; A1'-Reduced first current value; A2 - Second current value; A3-Third current value;
n-Preset frequency step;
Tin-Indoor ambient temperature; Tobj-Set temperature.

### DETAILED DISCERPTION OF EMBODIMENTS

The following will provide a clear and complete description of the technical solutions in some embodiments of the present disclosure, with reference to the accompanying drawings. It is obvious that the described embodiments are merely a portion of the embodiments of the present disclosure, and not all of them. All other embodiments that those skilled in the art may derive based on the embodiments provided in the present disclosure fall within the scope of the protection of the present disclosure.

Unless otherwise specified in the context, the term "comprise" and its variations such as "comprises" and "comprising" are interpreted to mean "including but not limited to". In the description of the disclosure, terms like "one embodiment", "some embodiments", "exemplary embodiments", "example" "specific example", or "some examples" are intended to indicate that specific features, structures, materials, or characteristics are included in at least one embodiment or example of the disclosure. These terms are not necessarily referring to the same embodiment or example. In addition, the specific features or characteristics may be included within one or more embodiments or examples in any suitable manner.

The terms "first" and "second" are used merely for description purposes and do not imply or suggest relative importance or the number of technical features indicated. Thus, features designated as "first" or "second" may explicitly or implicitly include one or more of such features. In the description of the embodiments of the present disclosure, unless otherwise specified, the term "multiple" means two or more.

When describing certain embodiments, terms such as "coupling" and "connection" as well as their derivatives may be used. The term "connection" should be understood in a broad sense. For example, "connection" can refer to a fixed connection, a detachable connection, or an integrated connection. It can be a direct connection or an indirect connection through an intermediate medium. For instance, in some embodiments, the term "connection" may be used to indicate that two or more components have direct physical or electrical contact with each other. Similarly, the term "coupled" may be used to indicate that two or more components have direct physical or electrical contact. However, the term "coupled" or "communicatively coupled" may also refer to cases where two or more components do not have direct contact with each other but still collaborate or interact. The disclosed embodiments are not necessarily limited to the content described herein.

The phrases "At least one of A, B, and C" and "At least one of A, B, or C" have the same meaning, both including only A, only B, only C, A and B, A and C, B and C, or A, B, and C.

The phrase "A and/or B" includes only A, only B, or the combination of A and B.

As used herein, the term "if" may optionally be interpreted to mean "when", "at the time of", "in response to determining", or "in response to detecting", depending on the context. Similarly, the phrase "if determining..." or "if [the stated condition or event] is detected" may optionally be interpreted to refer to "upon determining...", "in response to determining...", "when [the stated condition or event] is detected", or "in response to detecting [the stated condition or event]", depending on the context.

The use of "applicable to" or "configured to" herein implies openness and inclusivity, which does not exclude devices being applicable to or configured to perform additional tasks or steps.

In addition, the use of "based on" implies openness and inclusivity, as the process, steps, calculations, or other actions based on one or more of the conditions or values can in practice be based on additional conditions or be values beyond those stated.

As used herein, terms such as "about", "approximately", or "nearly" include the stated values as well as average values within an acceptable range of deviation from specific values. The acceptable range is determined by, for example, those skilled in the art considering the measurement in question and the error associated with a specific measurement (i.e., the limitations of the measurement system).

As used herein, the terms "parallel", "perpendicular", and "equal" include the situations described as well as situations that are approximately similar to the described situations, with the range of such approximately similar situations falling within an acceptable deviation range, where the acceptable deviation range is determined by, for example, those skilled in the art considering the measurement in question and the errors associated with measuring the specific quantity (i.e., the limitations of the measurement system). For example, "parallel" includes absolutely parallel and approximately parallel, where the acceptable deviation for approximately parallel can be within 5 degrees. The term "perpendicular" includes absolutely perpendicular and approximately perpendicular, where the acceptable deviation for approximately perpendicular can also be within 5 degrees. The term "equal" includes both absolute equality and approximate equality, where approximate equality is within an acceptable deviation range, such as the difference between the two that are considered equal being less than or equal to 5% of either one.

Currently, although operation modes of air conditioners vary, their overall control strategies are basically the same, involving establishing control logic between temperature zones and operating frequencies, as well as establishing a relationship between set temperatures and operating frequencies. This control strategy of the air conditioner determines that the power consumption is random and uncontrollable. With the increasing popularity of air conditioners, users' focus on the use of air conditioners is also constantly changing. For example, users are more concerned about the power consumption of the air conditioner during the current use, making it difficult for the air conditioner to meet user's needs under the current control strategy.

In related technologies, in order to meet the user's need for saving the power consumption of air conditioners, an energy-saving mode is available in the air conditioner, which relies on methods such as limiting frequency through current to achieve energy saving. However, using the method of limiting frequency through current to save energy makes it difficult for users to distinguish the power consumption of the air conditioner from that of other household appliances (such as a water heater), which is inconvenient for users.

In view of this, some embodiments of the present disclosure provide an air conditioner, which makes it possible to distinguish the power consumption of the air conditioner from that of other household appliances while improving the energy efficiency of the air conditioner.

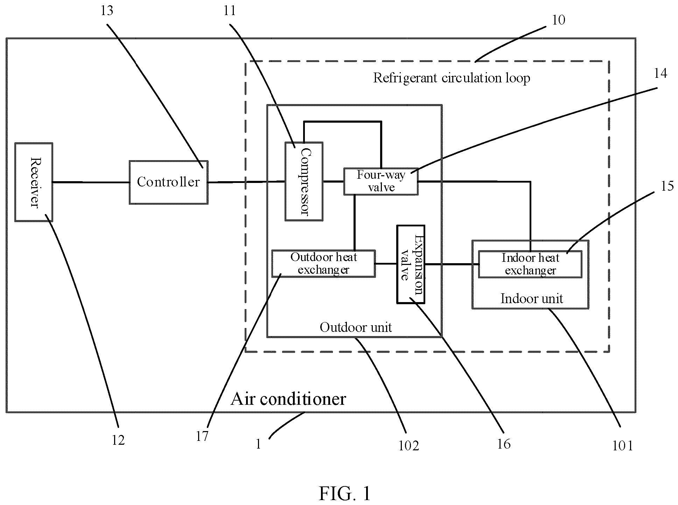

FIG. 1 is a block diagram of a structure of an air conditioner according to some embodiments. As shown in FIG. 1, the air conditioner 1 includes an indoor unit 101 and an outdoor unit 102.

The indoor unit 101 of the air conditioner 1 includes an indoor heat exchanger 15. The outdoor unit 102 of the air conditioner 1 includes a compressor 11, a four-way valve 14, and an outdoor heat exchanger 17.

The air conditioner 1 also includes an expansion valve 16. The expansion valve 16 can be arranged in the indoor unit 101 or the outdoor unit 102 of the air conditioner 1. For example, as shown in FIG. 1, the expansion valve 16 is arranged in the outdoor unit 102 of the air conditioner 1.

The indoor heat exchanger 15 and the outdoor heat exchanger 17 are connected to the compressor 11, the four-way valve 14, and the expansion valve 16 through refrigerant pipelines respectively. The compressor 11, the four-way valve 14, the indoor heat exchanger 15, and the outdoor heat exchanger 17 are connected in sequence to form a refrigerant circulation loop 10 of the air conditioner 1. The refrigerant circulates in the refrigerant circulation loop 10 to achieve the refrigerant circulation of the air conditioner 1. The refrigerant circulation involves a series of processes, including, for example, not only the compression, condensation, expansion, and evaporation of the refrigerant, but also the processes of heat exchange with the air through the indoor heat exchanger 15 and the outdoor heat exchanger 17 respectively, and the process of circulating refrigerant to the air that has been already regulated and heat exchanged.

The indoor heat exchanger 15 is configured to exchange heat between indoor air and the refrigerant transmitted in the indoor heat exchanger 15, and the outdoor heat exchanger 17 is configured to exchange heat between outdoor air and the refrigerant transmitted in the outdoor heat exchanger 17.

One of the two heat exchangers (e.g., the indoor heat exchanger 15 and the outdoor heat exchanger 17) is used as a condenser, and the other is used as an evaporator. For example, when the indoor heat exchanger 15 is used as a condenser, the outdoor heat exchanger 17 is used as an evaporator, so that the refrigerant that has absorbed heat through the outdoor heat exchanger 17 releases heat to the indoor air through the indoor heat exchanger 15 and thus condenses. In this case, the air conditioner 1 is used as a heating device working in a heating mode. Alternatively, when the indoor heat exchanger 15 is used as an evaporator, the outdoor heat exchanger 17 is used as a condenser, so that the refrigerant that has dissipated heat through the outdoor heat exchanger 17 absorbs heat from indoor air through the indoor heat exchanger 15 and thus evaporates. In this case, the air conditioner 1 is used as a cooling device working in a cooling mode.

The compressor 11 is configured to compress the refrigerant so that the compressed refrigerant enters the outdoor heat exchanger 17 or the indoor heat exchanger 15. For example, the compressor 11 compresses a low-temperature and low-pressure gaseous refrigerant to form a high-temperature and high-pressure gaseous refrigerant.

The compressor 11 is also configured to discharge the high-temperature and high-pressure gaseous refrigerant. The high-temperature and high-pressure gaseous refrigerant flows into the condenser (e.g., the indoor heat exchanger 15 or the outdoor heat exchanger 17). The condenser condenses the high-temperature and high-pressure gaseous refrigerant into a high-pressure liquid refrigerant, and releases heat to the surrounding environment in the condensation process.

The expansion valve 16 is configured to expand the high-pressure liquid refrigerant into a low-pressure gaseous-liquid refrigerant.

The evaporator (e.g., the indoor heat exchanger 15 or the outdoor heat exchanger 17) achieves the cooling effect by exchanging heat with the material to be cooled through the latent heat of evaporation of the refrigerant. For example, the evaporator absorbs heat from the surrounding environment and evaporates the low-pressure gaseous-liquid refrigerant to form a low-temperature and low-pressure gaseous refrigerant. The low-temperature and low-pressure gaseous refrigerant returns to the compressor 11. As a result, the refrigerant completes the circulation flow in the entire refrigerant circulation loop 10, thereby achieving the regulation of the indoor temperature by the air conditioner.

During the operation of the air conditioner 1, by setting a desired power consumption within a desired time in advance and formulating a control strategy for the air conditioner 1 with a target operation frequency (TOF) as the control object, the power consumption of the air conditioner 1 can be controlled. Moreover, the control strategy that controls the operating frequency of the air conditioner 1 will greatly save the power consumption of the air conditioner 1, thereby producing differentiated cooling or heating effects under different conditions (such as office, light exercise, reading, or sleeping conditions) when the weather is hot or cold.

When the air conditioner 1 is operating in a preset mode (such as the cooling mode or the heating mode), in order to allow the user to set the desired power consumption of the air conditioner 1 within a desired time in advance, a communication connection between a user's terminal device (such as a mobile phone, a tablet, or a computer) and the air conditioner 1 can be established. In some embodiments, the user inputs the desired power consumption of the air conditioner 1, e.g., a preset power quantity (PQ), through an application in a mobile phone, and based on communication between the mobile phone and the air conditioner 1, the input preset power quantity is transmitted to the air conditioner 1. It should be noted that the desired power consumption input by the user includes but is not limited to the preset power quantity PQ.

An example where the desired power consumption input by the user to the air conditioner 1 is the preset power quantity PQ is illustrated below.

As shown in FIG. 1, the air conditioner 1 also includes a receiver 12. The receiver 12 is configured to receive the preset power quantity PQ input by the user. As such, the user's terminal device connects to the receiver 12 of the air conditioner 1 to transmit the preset power quantity input by the user to the receiver 12.

The receiver 12 can include a radio frequency identification (RFID) receiver, a near field communication (NFC) receiver, an infrared receiver, etc.

The air conditioner 1 also includes a controller 13. The controller 13 is connected to the receiver 12. The receiver 12 is also configured to transmit the received preset power quantity PQ to the controller 13.

The controller 13 includes a processor. The processor may include a central processing unit (CPU), a microprocessor, an application-specific integrated circuit (ASIC), a chip, etc., and may be configured to perform corresponding operations when executing a program stored in a non-transitory computer-readable medium coupled to the controller 13. The non-transitory computer-readable storage medium may include a magnetic storage device (e.g., a hard disk, a floppy disk, or a magnetic tape), a smart card, or a flash memory device (e.g., an erasable programmable read-only memory (EPROM), a memory card, a memory stick, or a keyboard driver).

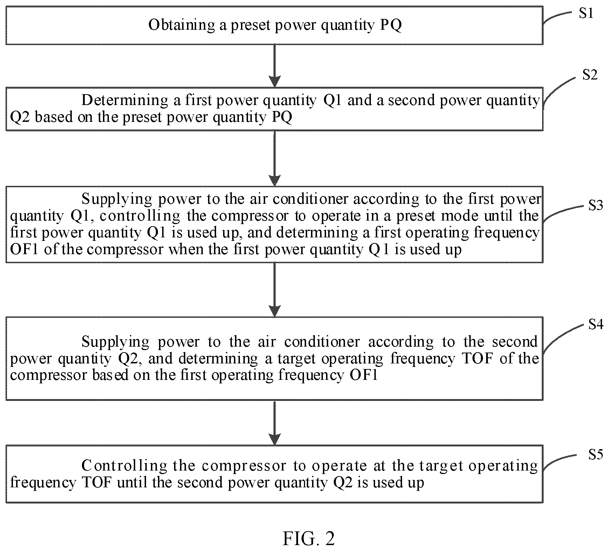

FIG. 2 is a flowchart of a power quantity control method for an air conditioner according to some embodiments. As shown in FIGS. 1-2, the controller 13 is configured to obtain a preset power quantity PQ, and determine a first power quantity Q1 and a second power quantity Q2 based on the preset power quantity PQ, where the sum of the first power quantity Q1 and the second power quantity Q2 is less than or equal to the preset power quantity PQ. Thus, based on the connection between the controller 13 and the receiver 12, the controller 13 can divide the preset power quantity PQ to ensure the heating or cooling effect of the air conditioner 1.

In some embodiments, the sum of the first power quantity Q1 and the second power quantity Q2 is equal to the preset power quantity PQ. It should be noted that the division standard of the first power quantity Q1 and the second power quantity Q2 is not limited in the embodiments of the present disclosure. For example, the first power quantity Q1 and the second power quantity Q2 can be divided according to respective proportions. Moreover, when dividing based on the proportions, the ratio of the first power quantity Q1 to the second power quantity Q2 can be set according to actual needs, for example, the ratio of the first power quantity Q1 to the second power quantity Q2 is 3:7.

For example, the ratio of the first power quantity Q1 to the second power quantity Q2 can be determined based on the difference between the indoor ambient temperature and the set temperature of the air conditioner 1. The proportion of the first power quantity Q1 (Q1/(Q1+Q2)=Q1/PQ) corresponding to a large temperature difference is greater than the proportion of the first power quantity Q1 corresponding to a small temperature difference. In general, the ratio of the first power quantity Q1 to the second power quantity Q2 is less than 5:5. However, it is not limited to this, and in some embodiments, the ratio of the first power quantity Q1 to the second power quantity Q2 can also be greater than 5: 5.

The controller 13 is also connected to the compressor 11. The controller 13 is also configured to supply power to the air conditioner 1 according to the first power quantity Q1. The compressor 11 is operated in the preset mode of the air conditioner 1 until the first power quantity Q1 is used up, and a first operating frequency OF1 of the compressor 11 when the first power quantity Q1 is used up is determined. After determining the first operating frequency OF1, the controller 13 is further configured to supply power to the air conditioner 1 according to the second power quantity Q2, determine a target operating frequency TOF of the compressor 11 based on the first operating frequency OF1, and control the compressor 11 to operate at the target operating frequency TOF until the second power quantity Q2 is used up.

As such, some embodiments of the present disclosure provide an air conditioner 1 that obtains a preset power quantity PQ through a controller 13 and determines a first power quantity Q1 and a second power quantity Q2 based on the preset power quantity PQ, so that the air conditioner 1, taking the first power quantity Q1 and the second power quantity Q2 as targets, outputs a cooling capacity under the preset cooling mode or a heating capacity under the preset heating mode, thereby achieving the regulation and control of the preset power quantity PQ of the air conditioner 1. Moreover, by regulating and controlling the preset power quantity PQ of the air conditioner 1 and controlling the operating frequency of the air conditioner 1 according to the preset power quantity PQ, users can specify the power consumption of the air conditioner, thereby distinguishing the power consumption of the air conditioner from the power consumption of other household appliances. In this way, not only can users' concerns about power consumption be eliminated, but also the energy efficiency of the air conditioner 1 can be improved while bringing convenience to users.

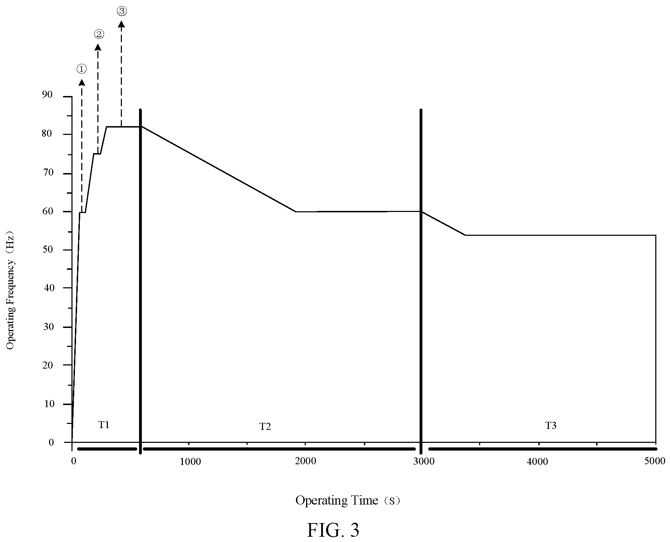

FIG. 3 shows the relationship between the operating frequency and the operating time of the compressor according to some embodiments. In some embodiments, as shown in FIG. 3, in the case that the sum of the first power quantity Q1 and the second power quantity Q2 is equal to the preset power quantity PQ, the controller 13 divides the preset power quantity PQ into the first power quantity Q1 and the second power quantity Q2 according to the proportions. The first power quantity Q1 is 30% of the preset power quantity PQ, and the second power quantity Q2 is 70% of the preset power quantity PQ.

First, the controller 13 supplies power to the conditioner 1 according to the first power quantity Q1 (i.e., 30% of the preset power quantity PQ). During the process when the controller 13 supplies power to the air conditioner 1 according to the first power quantity Q1, the compressor 11 of the air conditioner 1 operates for a time period T1 according to the preset cooling mode. During this period, the operating frequency of the compressor 11 is relatively high, and the cooling effect of the air conditioner 1 is significant. When supplying power to the air conditioner 1 with the first power quantity Q1, it is necessary to maintain the startup operation of the compressor 11. In order to meet the startup operation requirements of the compressor 11, the operating frequency of the compressor 11 will first go through the first stage ① and then the second stage ②. After the second stage ②, the operating frequency of the compressor 11 will immediately enter the third stage ③. The operating frequency at the third stage ③ is referred to as a first operating frequency OF1. The compressor 11 operates at the first operating frequency OF1 for a period of time, and when the time period T1 ends, it is considered that the first power quantity Q1 is used up.

When the first power quantity Q1 is used up, the controller 13 determines the first operating frequency OF1 of the compressor 11. Then, the controller 13 supplies power to the air conditioner 1 according to the second power quantity Q2 (i.e., 70% of the preset power quantity PQ). When supplying power to the air conditioner 1 with the second power quantity Q2, the controller 13 determines the target operating frequency TOF of the compressor 11 of the air conditioner 1, and controls the compressor 11 to operate at the target operating frequency TOF until the second power quantity Q2 is used up.

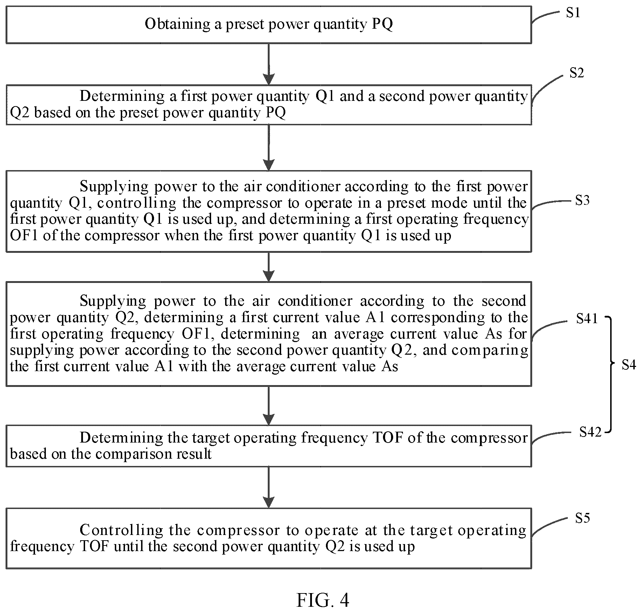

FIG. 4 is a flowchart of another power quantity control method for an air conditioner according to some embodiments. In some embodiments, as shown in FIG. 4, when determining the target operating frequency TOF of the compressor 11 based on the first operating frequency OF1, the controller 13 is configured, for example, to determine a first current value A1 corresponding to the first operating frequency OF1 and an average current value As for supplying power according to the second power quantity Q2, and compare the first current value A1 with the average current value As.

For example, as shown in FIGS. 3-4, the controller 13 supplies power to the air conditioner 1 according to the first power quantity Q 1. When the first power quantity Q1 is used up, the controller 13 records the current value corresponding to the first operating frequency OF1 of the air conditioner 1 as the first current value A1. When the controller 13 supplies power to the air conditioner 1 according to the second power quantity Q2, the compressor 11 operates for a time period of T2+T3. During this time period of T2+T3, the average current value As of the air conditioner 1 is determined based on the power consumption of the air conditioner 1, the required power consumption time, and the operating voltage of the compressor 11. After determining the first current value A1 and the average current value As, the first current value A1 and the average current value As are compared.

When determining the target operating frequency TOF of the compressor 11 based on the first operating frequency OF1, the controller 13 is also configured to determine the target operating frequency TOF of the compressor 11 based on the comparison result and control the compressor 11 to operate at the target operating frequency TOF. As such, the compressor 11 is controlled to operate at different frequencies based on the comparison between the first current value A1 and the average current value As, so as to improve the energy efficiency of the air conditioner 1.

Some embodiments of the present disclosure also provide another air conditioner 1, which includes an indoor unit 101, an outdoor unit 102, a receiver 12, and a controller 13, as shown in FIG. 1. It should be noted that the structure and function of the indoor unit 101 and the outdoor unit 102 in the embodiments of the present disclosure are the same as those in the above embodiments, and will not be repeated here.

The receiver 12 is configured to receive the preset power quantity PQ input by the user. The controller 13 is connected to the receiver 12 and the compressor 11 of the outdoor unit 102.

As shown in FIG. 4, the controller 13 is configured to: obtain a preset power quantity PQ; determine a first power quantity Q1 and a second power quantity Q2 based on the preset power quantity PQ, where the sum of the first power quantity Q1 and the second power quantity Q2 is less than or equal to the preset power quantity PQ; supply power to the air conditioner 1 according to the first power quantity Q1 and control the compressor 11 to operate in a preset mode until the first power quantity Q1 is used up, and determine the first operating frequency OF1 of the compressor 11 when the first power quantity Q1 is used up; supply power to the air conditioner 1 according to the second power quantity Q2, and determine a target operating frequency TOF of the compressor 11 based on the first operating frequency OF1 to control the power consumption of the air conditioner 1; and control the compressor 11 to operate at the target operating frequency TOF until the second power quantity Q2 is used up.

When supplying power to the air conditioner 1 according to the second power quantity Q2 and determining the target operating frequency TOF of the compressor 11 based on the first operating frequency OF1, the controller 13 is also configured to: determine a first current value A1 corresponding to the first operating frequency OF1, determine an average current value As for supplying power to the air conditioner 1 according to the second power quantity Q2, and compare the first current value A1 with the average current value As; and determine the target operating frequency TOF of the compressor 11 based on the comparison result to control the compressor 11 to operate at the target operating frequency TOF.

As such, the air conditioner 1 obtains the preset power quantity PQ through the controller 13, and determines the first power quantity Q1 and the second power quantity Q2 based on the preset power quantity PQ, so that the air conditioner 1, taking the first power quantity Q1 and the second power quantity Q2 as targets, outputs a cooling capacity under the preset cooling mode or a heating capacity under the preset heating mode, thereby achieving the regulation and control of the preset power quantity PQ of the air conditioner 1. Moreover, by regulating and controlling the preset power quantity PQ of the air conditioner 1 and controlling the operating frequency of the air conditioner 1 according to the preset power quantity PQ, users can specify the power consumption of the air conditioner, thereby distinguishing the power consumption of the air conditioner from the power consumption of other household appliances. In this way, not only can users' concerns about power consumption be eliminated, but also the energy efficiency of the air conditioner 1 can be improved while bringing convenience to users. In addition, the compressor 11 is controlled to operate at different frequencies based on the comparison between the first current value A1 and the average current value As, so as to improve the energy efficiency of the air conditioner 1.

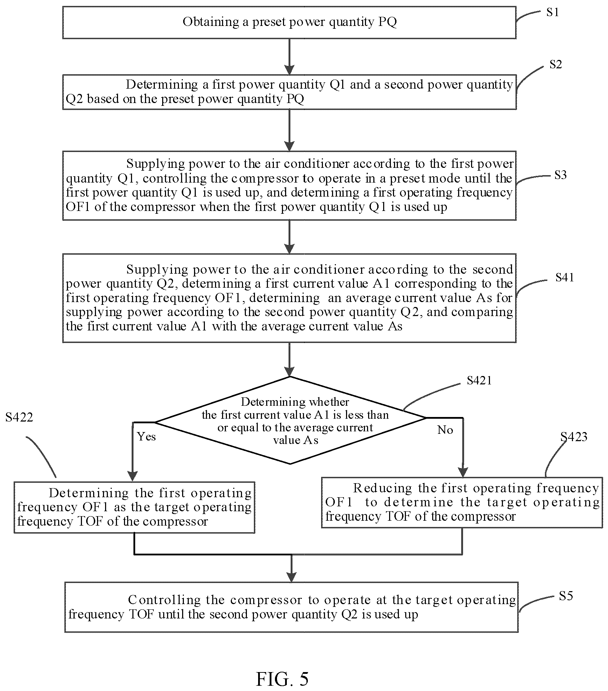

FIG. 5 is a flowchart of another power quantity control method for an air conditioner according to some embodiments. In some embodiments, as shown in FIG. 5, when determining the target operating frequency TOF of the compressor 11 based on the comparison result, the controller 13 is configured to determine whether the first current value A1 is less than or equal to the average current value As.

In response to the first current value A1 being less than or equal to the average current value As (i.e., A1<As), the controller 13 is further configured to determine the first operating frequency OF1 as the target operating frequency TOF of the compressor 11, and control the compressor 11 to operate at the first operating frequency OF1 until the second power quantity Q2 is used up.

In this case, it is considered that the temperature difference between the indoor ambient temperature and the set temperature of the air conditioner 1 is small after the first power quantity Q1 is used up. Therefore, the controller 13 does not need to control the air conditioner 1 to operate at a high frequency, and can still control the air conditioner 1 to operate at the first frequency OF1 to meet the user's temperature requirements.

Alternatively, in response to the first current value A1 being greater than the average current value As (i.e., A1 > As), the controller 13 is further configured to reduce the first operating frequency OF1 to determine the target operating frequency TOF of the compressor 11.

In this case, it is considered that the temperature difference between the indoor ambient temperature and the set temperature of the air conditioner 1 is large after the first power quantity Q1 is used up. Thus, the controller 13 should have needed to control the air conditioner 1 to operate at a higher frequency. However, since the first operating frequency OF1 (e.g., the operating frequency at the third stage ③ in FIG. 3) is already relatively high, and considering that the user needs to specify the power consumption of the air conditioner 1 to distinguish it from the power consumption of other household appliances, the first operating frequency OF1 can be appropriately reduced, and during the frequency reduction process, the target operating frequency TOF is determined. The compressor 11 is then controlled to operate at this target operating frequency TOF until the second power quantity Q2 is used up.

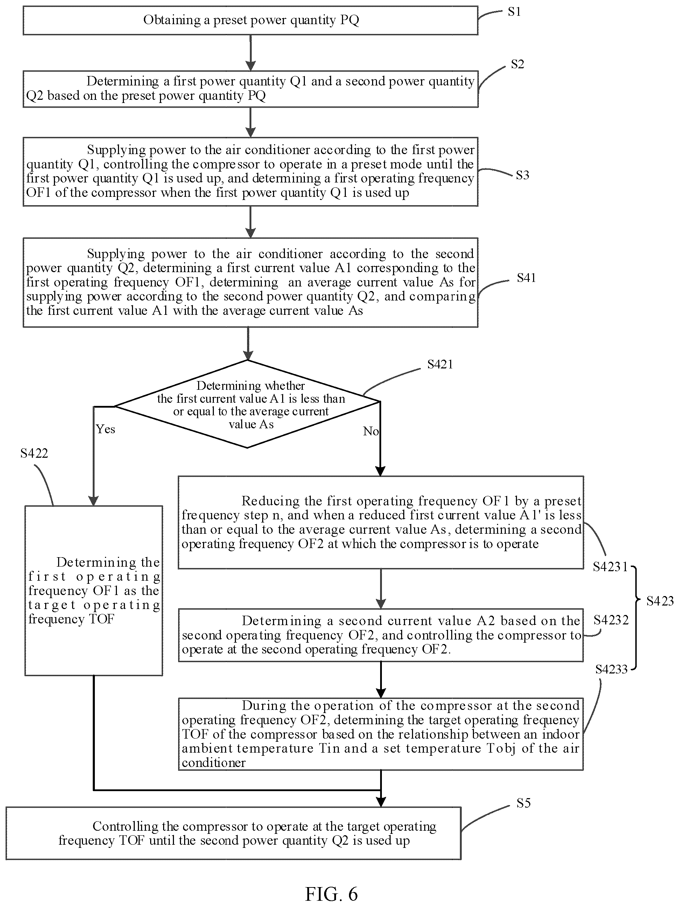

FIG. 6 is a flowchart of another power quantity control method for an air conditioner according to some embodiments. In some embodiments, as shown in FIG. 6, when the first current value A1 is greater than the average current value As, and during the process of reducing the first operating frequency OF1 to determine the target operating frequency TOF of the compressor 11, the controller 13 is configured to reduce the first operating frequency OF1 by a preset frequency step n. When a reduced first current value A1' is less than or equal to the average current value As (i.e., A1' ≤ As), a second operating frequency OF2 at which the compressor 11 is to operate is determined.

In this case, in response to the first current value A1 of the air conditioner 1 being greater than the average current value As, the controller 13 reduces the first operating frequency OF1 by the preset frequency step n (e.g., 2Hz/min). As the operating frequency of the compressor 11 corresponds to the current value of the air conditioner 1, when the first operating frequency OF 1 is reduced, the corresponding first current value A1 is also reduced. Therefore, by controlling the reduction of the first operating frequency OF1, the controller 13 can control the reduction of the first current value A1. To distinguish from the unreduced first current value A1, the reduced first current value is denoted as A1'. Consequently, when the reduced first current value A1' is less than or equal to the average current value As, the controller 13 determines the second operating frequency OF2 at which the compressor 11 is to operate.

In some embodiments, in order to maintain the operation stability of the compressor 11, the preset frequency step n by which the controller 13 reduces the first operating frequency OF1 is a small one. It can therefore avoid a lower operation stability of the compressor 11 due to the rapidly decreasing operating frequency of the compressor 11, thereby improving the operation stability of the compressor 11.

When the first current value A1 is greater than the average current value As, the controller 13 is configured to reduce the first operating frequency OF1 to determine the target operating frequency TOF. During this process, the controller 13 is further configured to determine a second current value A2 based on the second operating frequency OF2 and control the compressor 11 to operate at the second operating frequency OF2, and during the operation of the compressor 11 at the second operating frequency OF2, determine the target operating frequency TOF of the compressor 11 based on the relationship between an indoor ambient temperature Tin and a set temperature Tboj of the air conditioner 1.

In this case, once the controller 13 determines the second operating frequency OF2 of the compressor 11, the current value corresponding to the second operating frequency OF2 is thus determined. The current value of the air conditioner 1 corresponding to the second operating frequency OF2 is referred to as the second current value A2. After determining the second current value A2, the compressor 11 is controlled to operate at the second operating frequency OF2 for a period of time. Since the second current value A2 corresponding to the second operating frequency OF2 is just below the average current value As, the controller 13 can determine the target operating frequency TOF of the compressor 11 based on the relationship between the indoor ambient temperature Tin and the set temperature Tboj.

It can be understood that when the indoor temperature Tin is close to the set temperature Tboj, it is considered that the heat in the room is just exhausted when the air conditioner 1 is cooling, or it is considered that the cold in the room is just exhausted when the air conditioner 1 is heating.

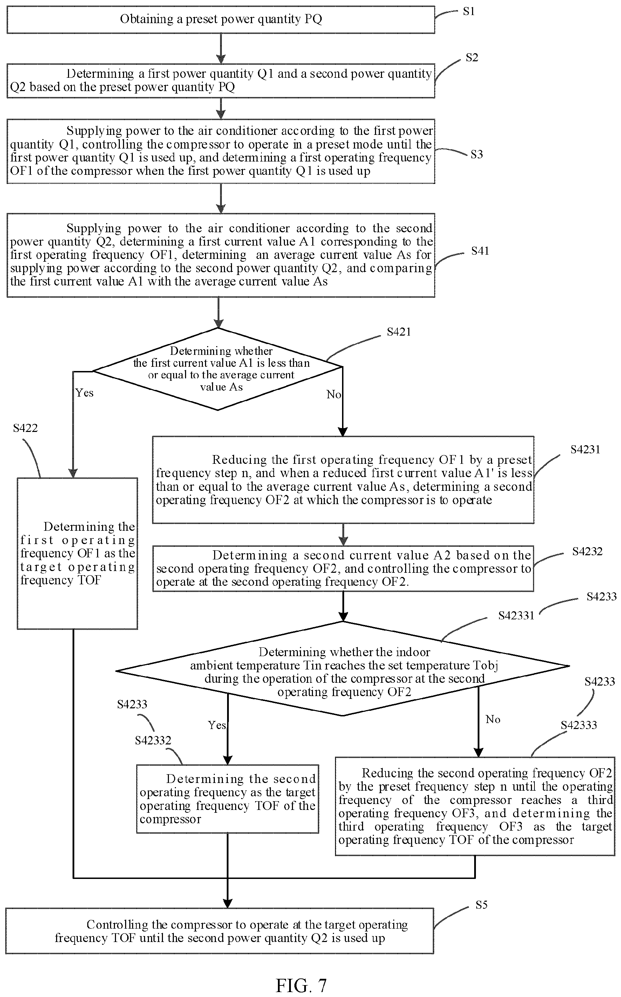

FIG. 7 is a flowchart of another power quantity control method for an air conditioner according to some embodiments. In some embodiments, as shown in FIG. 7, during the process of determining the target operating frequency TOF of the compressor 11 based on the relationship between the indoor ambient temperature Tin and the set temperature Tboj during the operation of the compressor 11 at the second operating frequency OF2, the controller 13 is configured to determine whether the indoor ambient temperature Tin reaches the set temperature Tobj during the operation of the compressor 11 at the second operating frequency OF2.

In response to the indoor ambient temperature Tin not reaching the set temperature Tobj, the controller 13 is further configured to determine the second operating frequency OF2 as the target operating frequency TOF of the compressor 11, and control the compressor 11 to operate at the target operating frequency TOF until the second power quantity Q2 is used up.

In this case, it is considered that the air conditioner 1 is still cooling while the indoor cold load has not been eliminated, or the air conditioner 1 is still heating while the indoor heat load has not been eliminated. It should be noted that a cooling capacity supplied to a room at a certain moment to maintain the thermal and moisture environment of a building is called the cold load. On the contrary, a heating capacity supplied to the room to compensate for the heat loss of the room is called the heat load. Therefore, the controller 13 of the air conditioner 1 determines the second operating frequency OF2 as the target operating frequency TOF and controls the compressor 11 to operate at the target operating frequency TOF until the second power quantity Q2 is used up, i.e., controls the compressor 11 to operate at the second operating frequency OF2 until the preset power quantity PQ is used up.

Alternatively, in response to the indoor ambient temperature Tin reaching the set temperature Tobj, the controller 13 is further configured to reduce the second operating frequency OF2 by the preset frequency step n until the operating frequency of the compressor 11 reaches a third operating frequency OF3, determine the third operating frequency OF3 as the target operating frequency TOF of the compressor 11, and control the compressor 11 to operate at the target operating frequency TOF until the second power quantity Q2 is used up.

In this case, it is considered that the indoor cold load has been eliminated while the air conditioner 1 is cooling and no further indoor cooling is required, or the indoor heat load has been eliminated while the air conditioner 1 is heating and no further indoor heating is required. Therefore, in order to save power, the operating frequency of the compressor 11 will continue to decrease until it reaches the third operating frequency OF3. The third operating frequency OF3 is the minimum operating frequency of the compressor 11. The current value corresponding to the minimum operating frequency of the compressor 11 is denoted as a third current value A3. When the operating frequency of the compressor is reduced to the third operating frequency OF3, the compressor 11 is controlled to operate at the third operating frequency OF3 until the second power quantity Q2 is used up, i.e., until the preset power quantity PQ is used up.

Some embodiments of the present disclosure also provide a power quantity control method for an air conditioner, which is applied to the air conditioner 1 as described above. For example, the method is implemented by the controller 13 of the air conditioner 1 as described above.

As shown in FIG. 2, the power quantity control method for the air conditioner 1 includes at least steps S1-S5.

In the step S1, a preset power quantity PQ is obtained.

In some embodiments, when the air conditioner 1 operates in the cooling mode, in order to achieve a fixed power consumption, the user can input a desired power consumption of the air conditioner 1, e.g., a preset power quantity (PQ), through an application in a mobile phone. The receiver 12 then receives the preset power quantity PQ input by the user. Through the communication between the mobile phone and the air conditioner 1, the controller 13 obtains the preset power quantity PQ.

In the step S2, a first power quantity Q1 and a second power quantity Q2 are determined based on the preset power quantity PQ, where the sum of the first power quantity Q1 and the second power quantity Q2 is less than or equal to the preset power quantity PQ.

In some embodiments, the sum of the first power quantity Q1 and the second power quantity Q2 is equal to the preset power quantity PQ. It should be noted that in order to ensure the heating or cooling effect of the air conditioner 1, the preset power quantity PQ is divided, for example, into the first power quantity Q1 and the second power quantity Q2.

In the step S3, power is supplied to the air conditioner 1 according to the first power quantity Q1, the compressor 11 is controlled to operate in a preset mode of the air conditioner 1 until the first power quantity Q1 is used up, and a first operating frequency OF1 of the compressor 11 when the first power quantity Q1 is used up is determined.

In some embodiments, as shown in FIG. 3, in the case that the sum of the first power quantity Q1 and the second power quantity Q2 is equal to the preset power quantity PQ, the preset power quantity PQ is divided, according to a ratio such as 3:7, into the first power quantity Q1 (i.e., 30% of the preset power quantity PQ) and the second power quantity Q2 (i.e., 70% of the preset power quantity PQ). First, power is supplied to the air conditioner 1 according to the first power quantity Q1. During the process of supplying power to the air conditioner 1 according to the first power quantity Q 1, the compressor 11 of the air conditioner 1 operates for a time period of T1 in the preset cooling mode. During this period, the operating frequency of the compressor 11 is relatively high, and the cooling effect of the air conditioner 1 is significant. When supplying power to the air conditioner 1 with the first power quantity Q1, it is necessary to maintain the startup operation of the compressor 11. In order to meet the startup operation requirements of the compressor 11, the operating frequency of the compressor 11 will first go through the first stage ① and then the second stage ②. After the second stage ②, the operating frequency of the compressor 11 will immediately enter the third stage ③. The operating frequency at the third stage ③ is referred to as a first operating frequency OF1. The compressor 11 operates at the first operating frequency OF1 for a period of time, and when the time period T1 ends, it is considered that the first power quantity Q1 is used up. Then, the first operating frequency OF1 of the compressor 11 when the first power quantity Q1 is used up is determined.

In the step S4, power is supplied to the air conditioner 1 according to the second power quantity Q2, and a target operating frequency TOF of the compressor 11 is determined based on the first operating frequency OF1.

In some embodiments, as shown in FIG. 3, the first operating frequency OF1 of the compressor 11 when the first power quantity Q1 is used up is determined. Then, power is supplied to the air conditioner 1 according to the second power quantity Q2 (e.g., 70% of the preset power quantity PQ). The target operating frequency TOF of the compressor 11 when supplying power to the air conditioner 1 according to the second power quantity Q2 is determined.

In the step S5, the compressor 11 is controlled to operate at the target operating frequency TOF until the second power quantity Q2 is used up.

As such, according to the power quantity control method for the air conditioner 1 in some embodiments of the present disclosure, a preset power consumption PQ is obtained, and a first power quantity Q1 and a second power quantity Q2 is determined according to the preset power consumption PQ, so that the air conditioner 1, taking the first power quantity Q1 and the second power quantity Q2 as targets, outputs a cooling capacity under the preset cooling mode or a heating capacity under the preset heating mode, thereby achieving the regulation and control of the preset power quantity PQ of the air conditioner 1. Moreover, by regulating and controlling the preset power quantity PQ of the air conditioner 1 and controlling the operating frequency of the air conditioner 1 according to the preset power quantity PQ, users can specify the power consumption of the air conditioner, thereby distinguishing the power consumption of the air conditioner from the power consumption of other household appliances. In this way, not only can users' concerns about power consumption be eliminated, but also the energy efficiency of the air conditioner 1 can be improved while bringing convenience to users.

It should be noted that the specific implementation of the power quantity control method for the air conditioner 1 in some embodiments of the present disclosure is similar to the specific implementations of the air conditioner 1 in any of the above-mentioned embodiments of the present disclosure. Therefore, in order to avoid redundancy, it is not repeated here.

In some embodiments, as shown in FIG. 4, the power quantity control method of supplying power to the air conditioner 1 according to the second power quantity Q2, and determining the target operating frequency TOF of the compressor 11 based on the first operating frequency OF1 in the step S4 includes steps S41 and S42.

In the step S41, power is supplied to the air conditioner 1 according to the second power quantity Q2, a first current value A1 corresponding to the first operating frequency OF1 is determined, an average current value As for supplying power according to the second power quantity Q2 is determined, and the first current value A1 is compared with the average current value As.

In the step S42, the target operating frequency TOF of the compressor 11 is determined based on the comparison result, such that the compressor 11 can be controlled to operate at the target operating frequency TOF.

Some embodiments of the present disclosure also provide another power quantity control method for an air conditioner 1. As shown in FIG. 5, the power quantity control method for the air conditioner 1 includes the steps S1-S5, and the step S4 includes the steps S41 and S42, as described above. To avoid redundancy, reference can be made to the above embodiments for the steps of the power quantity control method for the air conditioner 1 in the embodiments of the present disclosure, which will not be repeated here.

As such, according to the power quantity control method for the air conditioner 1, a preset power consumption PQ is obtained, and a first power quantity Q1 and a second power quantity Q2 are determined according to the preset power consumption PQ, so that the air conditioner 1, taking the first power quantity Q1 and the second power quantity Q2 as targets, outputs a cooling capacity under the preset cooling mode or a heating capacity under the preset heating mode, thereby achieving the regulation and control of the preset power quantity PQ of the air conditioner 1. Moreover, by regulating and controlling the preset power quantity PQ of the air conditioner 1 and controlling the operating frequency of the air conditioner 1 according to the preset power quantity PQ, users can specify the power consumption of the air conditioner, thereby distinguishing the power consumption of the air conditioner from the power consumption of other household appliances. In this way, not only can users' concerns about power consumption be eliminated, but also the energy efficiency of the air conditioner 1 can be improved while bringing convenience to users. In addition, the compressor 11 is controlled to operate at different frequencies based on the comparison between the first current value A1 and the average current value As, so as to improve the energy efficiency of the air conditioner 1.

In some embodiments, as shown in FIG. 5, the power quantity control method of determining the target operating frequency TOF of the compressor 11 based on the comparison result in the step S42 includes steps S421-S423.

In the step S421, whether the first current value A1 is less than or equal to the average current value As is determined.

In the step S422, in response to the first current value A1 being less than or equal to the average current value As, the first operating frequency OF1 is determined as the target operating frequency TOF of the compressor 11, such that the compressor 11 can be controlled to operate at the first operating frequency OF1 until the second power quantity Q2 is used up.

In the step S423, in response to the first current value A1 being greater than the average current value As, the first operating frequency OF1 is reduced to determine the target operating frequency TOF of the compressor 11, such that the compressor 11 can be controlled to operate at the target operating frequency TOF until the second power quantity Q2 is used up.

In some embodiments, as shown in FIG. 6, the power quantity control method of reducing the first operating frequency OF1 to determine the target operating frequency TOF of the compressor 11 in the step S423 includes steps S4231-S4233.

In the step S4231, the first operating frequency OF1 is reduced by a preset frequency step n. When a reduced first current value A1' is less than or equal to the average current value As, a second operating frequency OF2 at which the compressor 11 is to operate is determined.

In this case, in response to the first current value A1 of the air conditioner 1 being greater than the average current value As, the first operating frequency OF1 is reduced by the preset frequency step n (e.g., 2Hz/min). As the operating frequency of the compressor 11 corresponds to the current value of the air conditioner 1, when the first operating frequency OF1 is reduced, the corresponding first current value A1 is also reduced. Therefore, by controlling the reduction of the first operating frequency OF1, the reduction of the first current value A1 can be also controlled. Consequently, when the reduced first current value A1' is less than or equal to the average current value As, the second operating frequency OF2 at which the compressor 11 is to operate is determined.

In some embodiments, in order to maintain the operation stability of the compressor 11, the preset frequency step n by which the first operating frequency OF1 is reduced is a small one. It can therefore avoid a lower operation stability of the compressor 11 due to the rapidly decreasing operating frequency of the compressor 11, thereby improving the operation stability of the compressor 11.

In the step S4232, a second current value A2 is determined based on the second operating frequency OF2, and the compressor 11 is controlled to operate at the second operating frequency OF2.

In this case, once the second operating frequency OF2 of the compressor 11 is determined, the current value corresponding to the second operating frequency OF2 is also determined. The current value of the air conditioner 1 corresponding to the second operating frequency OF2 is referred to as the second current value A2.

In the step S4233, during the operation of the compressor 11 at the second operating frequency OF2, the target operating frequency TOF of the compressor 11 is determined based on the relationship between an indoor ambient temperature Tin and a set temperature Tobj of the air conditioner 1.

After determining the second current value A2, the compressor 11 is controlled to operate at the second operating frequency OF2 for a period of time. Since the second current value A2 corresponding to the second operating frequency OF2 is just below the average current value As, the target operating frequency TOF of the compressor 11 can be determined based on the relationship between the indoor ambient temperature Tin and the set temperature Tboj.

It can be understood that when the indoor temperature Tin is close to the set temperature Tboj, it is considered that the heat in the room is just exhausted when the air conditioner 1 is cooling, or it is considered that the cold in the room is just exhausted when the air conditioner 1 is heating.

In some embodiments, as shown in FIG. 7, the power quantity control method of determining the target operating frequency TOF of the compressor 11 based on the relationship between the indoor ambient temperature Tin and the set temperature Tobj of the air conditioner during the operation of the compressor 11 at the second operating frequency OF2 in the step S4233 includes steps S42331-S42333.

In the step S42331, whether the indoor ambient temperature Tin reaches the set temperature Tobj is determined during the operation of the compressor 11 at the second operating frequency OF2.

In the step S42332, in response to the indoor ambient temperature Tin not reaching the set temperature Tobj, the second operating frequency OF2 is determined as the target operating frequency TOF of the compressor 11, such that the compressor 11 can be controlled to operate at the target operating frequency TOF until the second power quantity Q2 is used up.

In this case, it is considered that the air conditioner 1 is still cooling while the indoor cold load has not been eliminated, or the air conditioner 1 is still heating while the indoor heat load has not been eliminated. Therefore, the second operating frequency OF2 is determined as the target operating frequency TOF and the compressor 11 is controlled to operate at the target operating frequency TOF until the second power quantity Q2 is used up, i.e., the compressor 11 is controlled to operate at the second operating frequency OF2 until the preset power quantity PQ is used up.

In the step S42333, in response to the indoor ambient temperature Tin reaching the set temperature Tobj, the second operating frequency OF2 is reduced by the preset frequency step n until the operating frequency of the compressor 11 reaches a third operating frequency OF3, and the third operating frequency OF3 is determined as the target operating frequency TOF of the compressor 11, such that the compressor 11 can be controlled to operate at the target operating frequency TOF until the second power quantity Q2 is used up.

In this case, it is considered that the indoor cold load has been eliminated while the air conditioner 1 is cooling and no further indoor cooling is required, or the indoor heat load has been eliminated while the air conditioner 1 is heating and no further indoor heating is required. Therefore, in order to save power, the operating frequency of the compressor 11 will continue to decrease until it reaches the third operating frequency OF3. The third operating frequency OF3 is the minimum operating frequency of the compressor 11. The current value corresponding to the minimum operating frequency of the compressor 11 is denoted as a third current value A3. When the operating frequency of the compressor is reduced to the third operating frequency OF3, the compressor 11 is controlled to operate at the third operating frequency OF3 until the second power quantity Q2 is used up, i.e., until the preset power quantity PQ is used up.

Some embodiments of the present disclosure also provide a computer-readable storage medium storing computer program instructions. The computer program instructions, when executed by a computer, cause the computer to perform the power quantity control method for the air conditioner 1 as provided in the above embodiments.

Some embodiments of the present disclosure also provide a computer program product. The computer program product includes computer program instructions. The computer program instructions, when executed by a computer, cause the computer to perform the power quantity control method for the air conditioner 1 as provided in the above embodiments.

Some embodiments of the present disclosure also provide a computer program. The computer program, when executed by a computer, causes the computer to perform the power quantity control method for an air conditioner as provided in the above embodiments.

The beneficial effects of the above-described computer-readable storage medium, computer program product, and computer program are the same as those of the power quantity control method for the air conditioner 1 as provided in the above embodiments, and will not be repeated here.

Those skilled in the art will appreciate that the scope of the present invention is not limited to the specific embodiments described above, and certain elements of the embodiments may be modified and replaced without departing from the spirit of the present application. The protection scope of the present application is defined by the appended claims.

## Claims

1. An air conditioner, comprising:
an indoor unit comprising an indoor heat exchanger;
an outdoor unit comprising an outdoor heat exchanger and a compressor, wherein the outdoor heat exchanger is connected to the indoor heat exchanger, and the compressor is configured to compress refrigerant so that the compressed refrigerant enters the outdoor heat exchanger or the indoor heat exchanger;
a receiver configured to receive a preset power quantity input by a user; and
a controller connected to the receiver and the compressor and configured to:
obtain the preset power quantity;
determine a first power quantity and a second power quantity based on the preset power quantity, wherein the sum of the first power quantity and the second power quantity is less than or equal to the preset power quantity;
supply power to the air conditioner according to the first power quantity, control the compressor to operate in a preset mode until the first power quantity is used up, and determine a first operating frequency of the compressor when the first power quantity is used up;
supply power to the air conditioner according to the second power quantity, and determine a target operating frequency of the compressor based on the first operating frequency to control a power consumption of the air conditioner; and
control the compressor to operate at the target operating frequency until the second power quantity is used up,
wherein when supplying power to the air conditioner according to the second power quantity and determining the target operating frequency of the compressor based on the first operating frequency, the controller is configured to:
determine a first current value corresponding to the first operating frequency, determine an average current value for supplying power to the air conditioner according to the second power quantity, and compare the first current value with the average current value; and
determine the target operating frequency of the compressor based on the comparison result and control the compressor to operate at the target operating frequency.

2. The air conditioner according to claim 1, wherein the average current value is determined based on the power consumption of the air conditioner, a power consumption time, and an operating voltage of the compressor during a period of supplying power to the air conditioner according to the second power quantity.

3. The air conditioner according to claim 1 or 2, wherein, when determining the target operating frequency of the compressor based on the comparison result, the controller is configured to:
determine whether the first current value is less than or equal to the average current value; and
determine, in response to the first current value being less than or equal to the average current value, the first operating frequency as the target operating frequency of the compressor; or
reduce, in response to the first current value being greater than the average current value, the first operating frequency to determine the target operating frequency of the compressor.

4. The air conditioner according to claim 3, wherein, when reducing, in response to the first current value being greater than the average current value, the first operating frequency to determine the target operating frequency of the compressor, the controller is configured to:
reduce the first operating frequency by a preset frequency step, and when a reduced first current value is less than or equal to the average current value, determine a second operating frequency at which the compressor is to operate;
determine a second current value according to the second operating frequency, and control the compressor to operate at the second operating frequency; and
determine the target operating frequency of the compressor based on a relationship between an indoor ambient temperature and a set temperature during the operation of the compressor at the second operating frequency.

5. The air conditioner according to claim 4, wherein the second current value is less than the average current value.

6. The air conditioner according to claim 4 or 5, wherein, when determining the target operating frequency of the compressor based on the relationship between the indoor ambient temperature and the set temperature during the operation of the compressor at the second operating frequency, the controller is configured to:
determine whether the indoor ambient temperature reaches the set temperature during the operation of the compressor at the second operating frequency; and
determine, in response to the indoor ambient temperature not reaching the set temperature, the second operating frequency as the target operating frequency of the compressor; or
reduce, in response to the indoor ambient temperature reaching the set temperature, the second operating frequency by the preset frequency step until the operating frequency of the compressor reaches a third operating frequency, and determine the third operating frequency as the target operating frequency of the compressor.

7. The air conditioner according to claim 6, wherein the third operating frequency is the minimum operating frequency of the compressor.

8. The air conditioner according to any one of claims 4-7, wherein the preset frequency step is 2Hz/min.

9. The air conditioner according to any one of claims 1-8, wherein the sum of the first power quantity and the second power quantity is equal to the preset power quantity, and the first power quantity and the second power quantity are 30% and 70% of the preset power quantity, respectively.

10. The air conditioner according to any one of claims 1-9, wherein the preset mode of the air conditioner comprises a cooling mode or a heating mode.

11. A power quantity control method for an air conditioner, applied to the air conditioner according to any one of claims 1-10, the method comprising:
obtaining a preset power quantity;
determining a first power quantity and a second power quantity based on the preset power quantity, wherein the sum of the first power quantity and the second power quantity is less than or equal to the preset power quantity;
supplying power to the air conditioner according to the first power quantity, controlling the compressor to operate in a preset mode until the first power quantity is used up, and determining a first operating frequency of the compressor when the first power quantity is used up;
supplying power to the air conditioner according to the second power quantity, and determining a target operating frequency of the compressor based on the first operating frequency to control a power consumption of the air conditioner; and
controlling the compressor to operate at the target operating frequency until the second power quantity is used up,
wherein the supplying power to the air conditioner according to the second power quantity, and determining the target operating frequency of the compressor based on the first operating frequency comprises:
determining a first current value corresponding to the first operating frequency, determining an average current value for supplying power to the air conditioner according to the second power quantity, and comparing the first current value with the average current value; and
determining the target operating frequency of the compressor based on the comparison result and controlling the compressor to operate at the target operating frequency.

12. The power quantity control method for the air conditioner according to claim 11, wherein the average current value is determined based on the power consumption of the air conditioner, a power consumption time, and an operating voltage of the compressor during a period of supplying power to the air conditioner according to the second power quantity.

13. The power quantity control method for the air conditioner according to claim 11 or 12, wherein the determining the target operating frequency of the compressor based on the comparison result comprises:
determining whether the first current value is less than or equal to the average current value; and
determining, in response to the first current value being less than or equal to the average current value, the first operating frequency as the target operating frequency of the compressor; or
reducing, in response to the first current value being greater than the average current value, the first operating frequency to determine the target operating frequency of the compressor.

14. The power quantity control method for the air conditioner according to claim 13, wherein the reducing the first operating frequency to determine the target operating frequency of the compressor comprises:
reducing the first operating frequency by a preset frequency step, and when a reduced first current value is less than or equal to the average current value, determining a second operating frequency at which the compressor is to operate;
determining a second current value according to the second operating frequency, and controlling the compressor to operate at the second operating frequency; and
determining the target operating frequency of the compressor based on a relationship between an indoor ambient temperature and a set temperature during the operation of the compressor at the second operating frequency.

15. The power quantity control method for the air conditioner according to claim 14, wherein the second current value is less than the average current value.

16. The power quantity control method for the air conditioner according to claim 14 or 15, wherein the determining the target operating frequency of the compressor based on the relationship between the indoor ambient temperature and the set temperature comprises:
determining whether the indoor ambient temperature reaches the set temperature during the operation of the compressor at the second operating frequency; and
determining, in response to the indoor ambient temperature not reaching the set temperature, the second operating frequency as the target operating frequency of the compressor; or
reducing, in response to the indoor ambient temperature reaching the set temperature, the second operating frequency by the preset frequency step until the operating frequency of the compressor reaches a third operating frequency, and determining the third operating frequency as the target operating frequency of the compressor.

17. The power quantity control method for the air conditioner according to claim 16, wherein the third operating frequency is the minimum operating frequency of the compressor.

18. The power quantity control method for the air conditioner according to any one of claims 14-17, wherein the preset frequency step is 2Hz/min.

19. The power quantity control method for the air conditioner according to any one of claims 11-18, wherein the sum of the first power quantity and the second power quantity is equal to the preset power quantity, and the first power quantity and the second power quantity are 30% and 70% of the preset power quantity, respectively.

20. The power quantity control method for the air conditioner according to any one of claims 11-19, wherein the preset mode of the air conditioner comprises a cooling mode or a heating mode.
